Europäisches Patentamt

European Patent Office

Office européen des brevets

(11) Publication number: **0 403 284**
**A1**

# EUROPEAN PATENT APPLICATION

(21) Application number: **90306511.8**

(22) Date of filing: **14.06.90**

(51) Int. Cl.5: **E05F 15/16, E05F 15/10**

(30) Priority: **15.06.89 JP 152536/89**

(43) Date of publication of application:
**19.12.90 Bulletin 90/51**

(84) Designated Contracting States:
**AT BE CH DE DK ES FR GB GR IT LI LU NL SE**

(71) Applicant: POLYPLASTICS CO. LTD.
**3-13, Azuchicho, 2-chome**
**Chuo-Ku Osaka-shi Osaka(JP)**

(72) Inventor: **Koshimura, Takefumi**
**2-31-4 Aobadai, Midori-ku**
**Yokohama-shi, Kanagawa(JP)**
Inventor: **Fukui, Kiichiro**
**1427-31 Atsuhara**
**Fuji-shi, Shizuoka(JP)**

(74) Representative: **Jackson, Peter et al**
**HYDE, HEIDE & O'DONNELL 10-12 Priests**
**Bridge**
**London SW15 5JE(GB)**

(54) Gear case for power window regulators and power window regulator using same.

(57) A gear case for power window regulators, housing therein a worm gear device for use in reducing the rotational speed of a motor drive, is characterized in that the gear case consists of a thermoplastic resin and a metal plate of which at least the greater part is encapsulated in the thermoplastic resin, the metal plate being composed of a projecting portion extending outward along a bearing on the gear case for an output shaft, and a substantially flat portion extending along a side surface of the gear case from a base part of said projecting portion to the outer circumference of said gear case.

Fig.3.

## GEAR CASE FOR POWER WINDOW REGULATORS AND POWER WINDOW REGULATOR USING SAME

This invention relates to a power window regulator for automobiles, in particular to a gear case forming part of a power window regulator.

A power window regulator for automobiles is an apparatus using electric power for raising and lowering of a window. Such apparatus has become widely used in recent years for eliminating troublesome manual operation of automobile window raising and lowering.

The known mechanisms for power-regulation of door window raising and lowering include: an arm-type mechanism using a single arm, parallel arms or X-shaped arms; a wire-type mechanism using a geared cable and a wire rope; a rack-type mechanism and a tape mechanism. A driving means for such mechanisms consists generally of a motor, a worm gear device (including a worm and a worm-driven wheel) for reducing the rate of revolution of the motor, an output shaft connected to the worm gear device via a buffer member, a "gear" case for housing, connecting and retaining these parts, and a cover for the case. Power is transmitted from the motor to the output shaft via the worm gear device and is further transmitted to the window-raising and -lowering mechanism (for example an arm, a wire, a rack or a tape) via a pinion gear, a fan-shaped gear and a drum in accordance with the type of a door window-raising and -lowering mechanism in use.

In such driving systems for power window regulators, the gear cases which have heretofore been used for housing the worm gear device and supporting its output shaft on a generally cylindrical bearing portion thereof have consisted mostly of a metal, for example, a die-casting of aluminium and zinc. In order to reduce the weight of the case and the cost of manufacturing the same, and to prevent the case from being rusted and corroded, forming the case out of a resin has recently been discussed. In an operation of opening and closing of an automobile door window by a power window regulator of this type, especially in the closing operation, a large load is imparted to the gear case, especially to the portion of the case around the output shaft bearing. The magnitude of this imparted load is too large for a gear case simply formed out of a resin.

Moreover, in the final stage of a window closing operation (after a window is apparently closed), a further load is applied in the closing direction of the window to close the window completely, or for the constructional reasons of the motor-containing gear case, the load being detected in terms of the level of electric current flowing in the motor. The motor is stopped when this electric current reaches a predetermined level. The magnitude of this further load is considerable. It is transmitted to the output shaft and works as compressive and bending stress on the part of the gear case around the output shaft bearing. After prolonged use of the gear case the effects of the load include creep deformation, which greatly reduces the operability of the power window regulator, or creep destruction of the gear case, which in some cases stops the the power window regulator from functioning. Thus although it had been anticipated that a gear case formed out of a resin would be advantageous in many respects for use in a power window regulator, in practice such a gear case has a durability problem because the stress occurring therein can cause the gear case to be deformed or destroyed.

A primary object of the present invention, which has been developed in view of these problems of prior art gear cases for power window regulators, is to provide an excellent resin gear case formed at its greater part out of a resin so as to reduce the weight thereof, and having a high durability with respect to a large load imparted to the output shaft during operation of the regulator, especially when a window closing operation is completed, and to provide a power window regulator having improved operating qualities by virtue of incorporating the improved gear case.

According to the invention this object is achieved by a gear case of thermoplastic resin incorporating a specially shaped metal plate encapsulated (buried) therein.

Thus the present invention provides a gear case for a power window regulator, housing therein a worm gear device which comprises a worm and a worm-driven wheel for reducing the rotational speed from a motor to an output shaft driving a window-raising and -lowering mechanism, said gear case including a bearing for the said shaft and a substantially flat side portion which forms a surface of the gear case from the bearing to an outer circumference of the gear case, characterized in that the gear case is formed of a thermoplastic resin and includes a metal plate, at least the greater part of the metal plate being encapsulated by thermoplastic resin, wherein the metal plate is composed of an outwardly projecting portion extending along the bearing and a substantially flat portion extending within the substantially flat side portion of the gear case from the bearing to the outer circumference.

The invention further provides a power window regulator comprising a motor, a worm gear device which comprises a worm and a worm-driven wheel for reducing the rotational speed of drive from the motor, an

2

output shaft from the worm gear device to a window-raising and -lowering mechanism, and a gear case housing the worm gear device, said gear case including a bearing for the said shaft and a substantially flat side portion which forms a surface of the gear case from the bearing to an outer circumference of the gear case, characterized in that the gear case is formed of a thermoplastic resin and includes a metal plate, at least the greater part of the metal plate being encapsulated by thermoplastic resin, wherein the metal plate is composed of an outwardly projecting portion extending along the bearing and a substantially flat portion extending within the substantially flat side portion of the gear case from the bearing to the outer circumference.

Gear cases for automobile power window regulators according to the present invention have a very high durability with respect to a load imparted to a bearing portion of the gear case, which would otherwise cause the gear case to be deformed or broken. Such gear cases are advantageous over conventional metal gear cases for power window regulators in having lower weight, being producable at lower cost, and in being free from problems of rust and corrosion. Power window regulators using such a metal plate/resin gear case are also excellent in operation.

The metal plate to be encapsulated in the side surface portion of the gear case body must essentially have a projecting portion extending along a bearing portion of the gear case, and a, substantially flat portion extending from this projecting portion to the outer circumference of the gear case body along a side surface portion thereof. Although it is desirable that the distance by which the projection extends from the flat portion be substantially the same as the length of the bearing portion, it is sufficiently effective that the projecting distance of the projecting portion be around not less than 1/3 of the length of the bearing portion. The bearing-support projecting portion is preferably formed so as to have a cylindrical shape in conformity with the shape of the bearing portion, but it may also be formed so as to have some axially divided parts or a discontinuous circular cross section.

The metal plate is preferably encapsulated in the thermoplastic resin by insert molding. Any of the known insert molding methods can be utilized. Perforations are preferably included in the plate to assist the resin to run into the required locations around the plate.

In addition to the flat plate and projecting portions described above, the metal plate can conveniently include other portions, for example projecting portions extending along an outer circumferential surface of an outer cylindrical portion of the gear case. Such other portions may for example support a closure cap for the gear case.

The substantially flat portion of the metal plate preferably extends to at least one portion of the gear case having holes through which the gear case can be mounted on an automobile body.

The invention is further described with reference to the accompanying drawings. Application of the invention is not limited to the gear cases having the shapes illustrated in these drawings.

Figure 1 shows an example of a gear case (typically made of polybutylene terephthalate resin) to which the present invention can be applied, wherein Figure 1A is a schematic plan taken from the side of a worm gear housing portion; and Figure 1B is a schematic sectional view of the gear case of Figure 1A, taken along the line X-X therein;

Figure 2 shows an example of a metal plate with which a gear case for power window regulators is insert molded, wherein Figure 2A is a schematic plan of the metal plate; and Figure 2B is a schematic sectional view of the metal plate, taken along the line Y-Y of Figure 2A;

Figure 3 shows the gear case of Figure 1 with the metal plate of Figure 2 insert molded therein, wherein Figure 3A is a schematic plan showing the position in which the metal plate extends; and Figure 3B is a schematic sectional view taken along the line Z-Z of Figure 3A, the inserted metal plate being hatched in Figure 3B. Projecting portions of this inserted metal plate are indicated in Figure 3A by black lines. .

Figures. 4 and 5 are schematic plans of other modes of metal plates to be insert molded; and

Figures 6 to 9 schematically show the methods employed by the present inventors for evaluating the gear cases for power window regulators in the embodiments.

In the accompanying figures the reference numerals indicate components of the power window regulators and testing means as follows:

1...motor-mounting portion,

2...worm-containing portion,

3.. storage portion for worm-driven wheel,

4...bearing portion for an output shaft,

5...cover(cap) mounting portion,

6...holes (bosses) at which the gear case is attached to an automobile door,

7...portion of a gear case in which the worm and worm-driven wheel are meshed, [the cylindrical side wall of the portion of the gear case which is around a part designated by the reference numeral 7 is provided with

3

holes (not shown)], the worm and worm wheel being meshed with each other around the part 7,

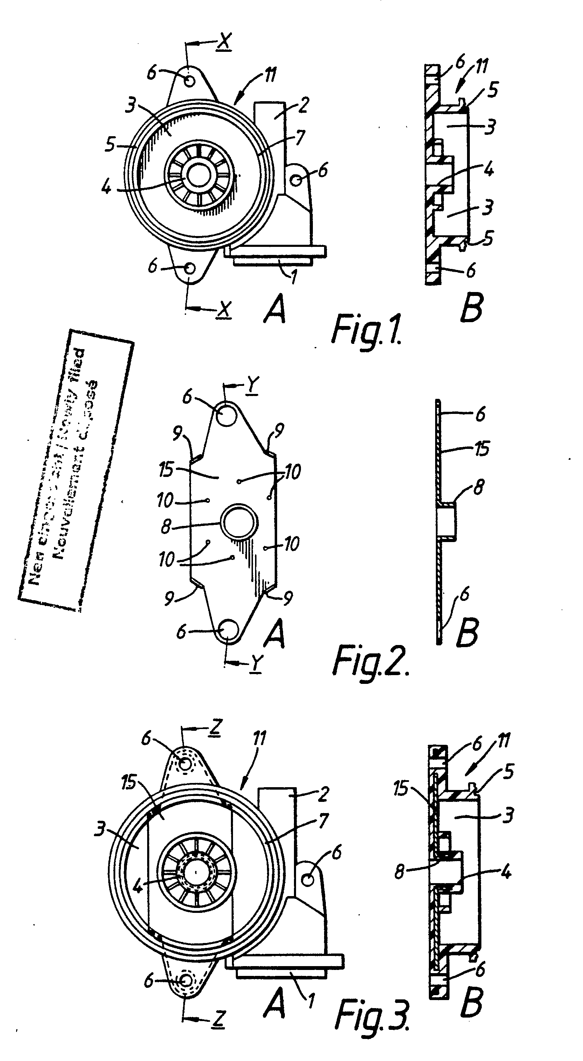

8...projection of metal plate extending along and supporting the output shaft-bearing portion of the gear case (said bearing portion being indicated by reference numeral 4 in Figures 1A and 1B),

9...projections extending along a cylindrical circumferential portion of the gear case,

10...holes (runners for resin) provided in metal plate,

11...gear case for power window regulators,

12...fixing jigs,

13...shaft,

14...constant temperature tank,

15...flat portion of metal plate,

W...testing loads.

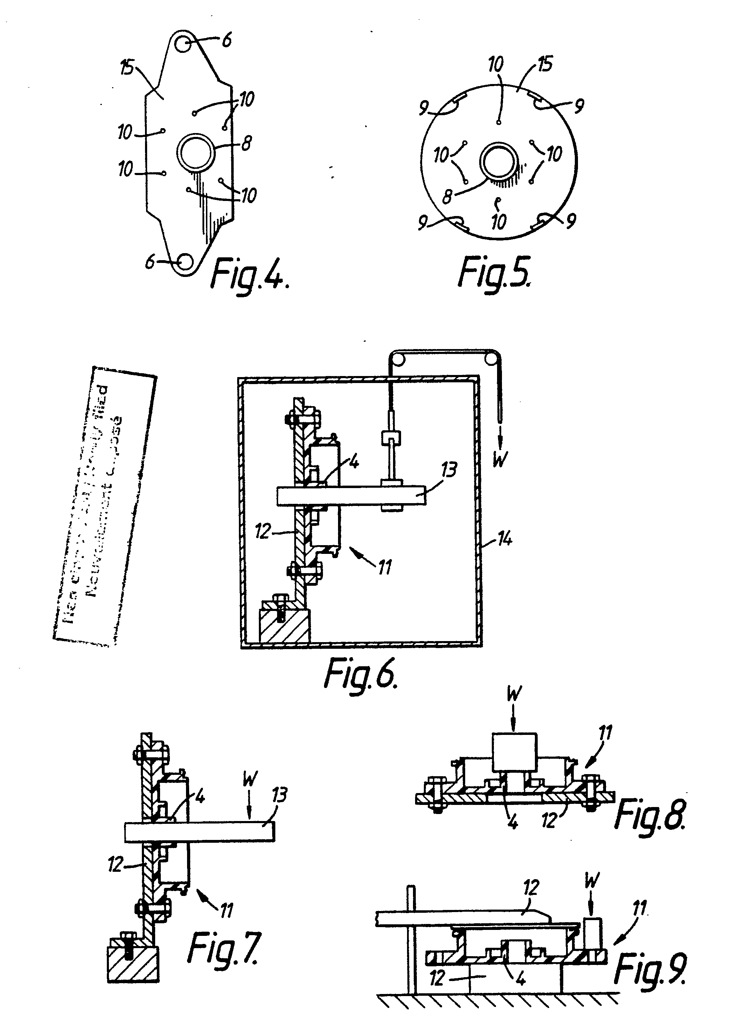

In the gear case of Figure 1, a motor is installed on a mounting portion 1 and a worm in a portion 2, a worm-driven wheel being housed in a casing portion 3. An output shaft (indicated in Figure 6 by reference numeral 13) is inserted in a cylindrical bearing portion 4 and connected to the worm-driven wheel, via a buffer member as necessary. A pinion gear or a drum is mounted firmly on the output shaft in accordance with the type (arm-type, wire-type or rack-type) of a window-raising and -lowering means, whereby a fan-shaped gear and an arm, a wire or a rack connected thereto are operated to carry out the raising and lowering of the window.

When window raising and lowering operations are carried out by such a power window regulator, and especially when a window closing operation is completed, a large load is imparted to an output shaft as mentioned above and works as a force for inclining the output shaft around a bearing portion such as shown by reference numeral 4 in Figure 1. The bearing constitutes an output shaft-supporting portion and acts as a fulcrum. In a gear case formed of a resin alone, the bearing portion and the part of a side surface around the bearing portion are creep-deformed or creep-destroyed, and the functions of the power window regulator are greatly impaired.

On the other hand, the gear case for power window regulators according to the present invention consists of a thermoplastic resin with a metal plate encapsulated, for example by insert molding, in the part of the resin which forms a side surface portion of a gear case body. Such a metal plate used in the present invention consists, for example, of a metal plate having a shape shown in Figure 2, which is encapsulated in a side surface portion of a gear case body by insert molding as shown in Figure 3. Other examples of metal plates are shown in Figures 4 and 5. The substantially flat portion occupying a space between the base part of the projecting portion and the outer circumference of the gear case body and along the side surface portion thereof necessarily extends in at least two directions. This substantially flat portion may extend in substantially symmetrical directions with respect to the projecting portion so that the parts, which extend in such directions, of the flat portion are balanced with each other. The substantially flat portion may also extend in all directions from the projecting portion, i.e. it may be provided on the whole side surface of the gear case body. The flat portion thus extending along the side surface portion of the gear case body preferably further extends to the parts of the gear case body which are around the holes (designated by reference numeral 6 in Figure 1) at which the gear case is mounted on an automobile body, and it is preferably provided with projecting portions (designated by a reference numberal 9 in Figure 2) extending along the outer circumferential surface of an outer cylindrical portion of the gear case body for improving the strength of the gear case. In a gear case having reinforcing ribs around a bearing portion as shown in Figure 1, it is preferable that the portions of an inserted metal plate which are opposed to these ribs are provided with small holes (designated by a reference numeral 10 in Figure 2) which constitute runners for a resin. Although this inserted metal plate requires not to be exposed to the inner surface of the bearing portion, the other portion of the metal plate may be completely encapsulated in the resin or partially exposed.

For molding reasons, a main material used to form a gear case in the present invention is a thermoplastic resin, especially an engineering resin having excellent physical properties. The resins of this kind include, for example, a thermoplastic polyester resin, a polyarylene sulphide resin, a polyacetal resin, a polyamide resin, a polycarbonate resin, a polyphenylene oxide resin and polyallylate. Out of these thermoplastic resins, the preferred resins are the thermoplastic polyester resins (polyethylene terephthalate and polybutylene terephthalate), polyarylene sulphide resin (polyphenylene sulphide) and polyacetal resin.

A known additive and/or a filler, which is added to a general thermoplastic resin in accordance with the purpose of using the resin, can be added to the thermoplastic resin used in the present invention. These materials include, for example, various stabilizers for preventing the oxidation of the thermoplastic resin in use and improving the weather resistance thereof, lubricants, parting agents, plasticizers, nucleides, anti-static agents, surfactants, anti-friction agents, flame retardants, auxiliary flame retardants, pigments, dyes, or fibrous, plate type, granular and pulverulent fillers, such as glass fiber, carbon fiber, potassium titanate, glass flakes, mica, glass beads and talc. Adding a fibrous filler, such as glass fiber or carbon fiber in particular, is especially suitable for the use of the present invention since using such a filler enables the mechanical strength, rigidity and thermal assistance of a gear case to be improved. Moreover, using a granular filler and/or a plate type filler in addition to the above-mentioned filler enables the resultant gear case also to have a dimensional stability (deformation resistance and warping resistance) and is therefore more preferable.

Some other organic high molecular substances may be blended auxiliarily with the above-mentioned thermoplastic resin in accordance with a purpose of adding of the substances and so as not to greatly lower the rigidity and thermal resistance of a gear case and the moldability of the starting resin.

The present invention will now be described more in detail on the basis of its embodiments but is not limited to these embodiments.

Embodiments 1-4 and Comparative Examples 1-2:

Gear cases shown in Figure 1 were insert molded by using a polybutylene terephthalate resin (containing 20% by weight of glass fiber and 20% by weight of glass flakes) and a polyphenylene sulphide resin (containing 40% by weight of glass fiber) as well as an insert metal plate having shapes shown in Figures 2,3 and 5. A load was imparted to a bearing portion of each of the gear cases thus obtained, to evaluate their deformation and breaking strength.

For the purpose of comparison, gear cases having a shape shown in Figure 1 and molded out of the above-mentioned resins only (not provided with a metal plate) were also evaluated in the same manner. The results are shown in Table 1.

The evaluation items and evaluation method were as follows.

Creed deformation of output shaft:

A gear case was held firmly as shown in Figure 6 in a constant temperature tank set to 100° C, and a shaft was inserted through a bearing portion therefor, an upward load of 5.9 MPa (60 kg/cm$^2$) having then been imparted to the shaft for 200 hours. The quantity of deformation of the gear case was then measured in the position thereon which was 30mm away from the bearing portion for an output shaft.

Bending strength of output shaft:

A gear case was held firmly as shown in Figure 7, and a shaft was inserted through a bearing portion for an output shaft. A load was imparted to the shaft to measure the breaking strength of the gear case. The level of the load which was recorded when a crack occured at a free end part of the bearing portion was determined as the breaking strength of the gear case.

Falling strength of output shaft:

A gear case was held firmly as shown in Figure 8, and a load was imparted to a bearing portion for an output shaft to measure the breading strength of the gear case (breakage occurred mainly around the reinforcing ribs).

Bending strength of mounting boss:

A gear case was held firmly as shown in Figure 9, and a load was imparted to a mounting boss to measure the breaking strength of the gear case.

The gear case obtained in Embodiment 1 was installed in a power window regulator, and operability tests were conducted repeatedly. The test results showed that this gear case had an excellent operability.

5

TABLE 1

| | Embodiment 1 | Embodiment 2 | Embodiment 3 | Comparative Example 1 | Embodiment 4 | Comparative Example 2 |
|---|---|---|---|---|---|---|
| Resin used | PBT*1 | PBT*1 | PBT*1 | PBT*1 | PPS*2 | PPS*2 |
| Shape of insert metal plate | Fig. 2 | Fig. 4 | Fig. 5 | None | Fig. 2 | None |
| Creep deformation (mm) of output shaft | 0.6 | 0.6 | 0.6 | 4.5 | 0.5 | 3.6 |
| Bending strength MPa (kg/cm$^2$) of output shaft | 18.6 (190) | 18.8 (192) | 18.5 (189) | 17.3 (176) | 19.9 (203) | 18.1 (185) |
| Falling strength KN (kgf) of output shaft | 2.16 (220) | 2.09 (214) | 2.23 (227) | 1.48 (151) | 2.28 (232) | 1.60 (163) |
| Bending strength KN (kgf) of mounting boss | 1.51 (154) | 1.46 (149) | 1.01 (103) | 0.98 (100) | 1.62 (165) | 1.05 (107) |

*1: Polybutylene terephthalate resin
*2: Polyphenylene sulphide resin

## Claims

1. A gear case for a power window regulator, housing therein a worm gear device which comprises a worm and a worm-driven wheel for reducing the rotational speed from a motor to an output shaft driving a window-raising and -lowering mechanism, said gear case including a bearing portion for the said shaft and a substantially flat side portion which forms a surface of the gear case from the bearing to an outer circumference of the gear case, characterized in that the gear case is formed of a thermoplastic resin and includes a metal plate, at least the greater part of the metal plate being encapsulated by thermoplastic resin, wherein the metal plate is composed of an outwardly projecting portion extending along the bearing and a substantially flat portion extending within the substantially flat side portion of the gear case from the bearing to the outer circumference.

2. A gear case according to claim 1, wherein the metal plate is insert-molded in the thermoplastic resin.

3. A gear case according to claim 2, wherein the metal plate includes perforations to assist the insert molding.

4. A gear case according to any preceding claim, wherein the distance by which the bearing-support projecting portion of the metal plate extends from the flat portion thereof is substantially the same as the length of the bearing portion of the gear case.

5. A gear case according to any preceding claim, wherein the bearing-support projecting portion of the metal plate has a cylindrical shape in conformity with the shape of the bearing portion.

6. A gear case according to any one of claims 1 to 4, wherein the bearing-support projecting portion of the metal plate has a discontinuous circular cross section.

7. A gear case according to any preceding claim, wherein the metal plate has other projecting portions extending along an outer circumferential surface of an outer cylindrical portion of the gear case.

8. A gear case according to any preceding claim, wherein the substantially flat portion of the metal plate extends to at least one portion of the gear case having holes through which the gear case can be mounted on an automobile body.

9. A gear case according to any preceding claim, wherein the thermoplastic resin is selected from the group consisting of a thermoplastic polyester resin, a polyarylene sulphide resin and a polyacetal resin.

10. A power window regulator comprising a motor, a worm gear device which comprises a worm and a worm-driven wheel for reducing the rotational speed of drive from the motor, an output shaft from the worm gear device to a window-raising and -lowering mechanism, and a gear case housing the worm gear device, said gear case including a bearing for the said shaft and a substantially flat side portion which forms a surface of the gear case from the bearing to an outer circumference of the gear case, characterized in that the gear case is formed of a thermoplastic resin and includes a metal plate, at least the greater part of the metal plate being encapsulated by thermoplastic resin, wherein the metal plate is composed of an outwardly projecting portion extending along the bearing and a substantially flat portion extending within the substantially flat side portion of the gear case from the bearing to the outer circumference.

Fig.1.

Fig.2.

Fig.3.

Fig.4.

Fig.5.

Fig.6.

Fig.7.

Fig.8.

Fig.9.

## EINSCHLÄGIGE DOKUMENTE

EP 90306511.8

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | GB - A - 1 592 748 (DAIMLER BENZ AG) * Fig. 1 * -- | 1,8,10 | E 05 F 15/16 E 05 F 15/10 |
| A | US - A - 4 471 251 (YAMASHITA) * Fig. 4 * -- | 1,8,10 | |
| A | DE - A1 - 2 838 678 (KÜSTER & CO.) * Fig. 2,5 * -- | 1,8,10 | |
| A | DE - A1 - 2 854 713 (SWF - G. RAU GMBH) * Fig. 18 * -- | 1,10 | |
| A | EP - A1 - 0 360 912 (SIEMENS AG) * Fig. 1 * -- | 1,10 | |
| A | DE - A1 - 3 318 362 (SWF AUTO-ELECTRIC) * Totality * ---- | | RECHERCHIERTE SACHGEBIETE (Int Cl⁵) B 60 J E 05 F F 16 C H 02 K |

Der vorliegende Recherchenbericht wurde für alle Patentansprüche erstellt.

| Recherchenort VIENNA | Abschlußdatum der Recherche 21-08-1990 | Prüfer HENGL |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82